# EUROPEAN PATENT APPLICATION

(11) **EP 4 571 580 A1**
(43) Date of publication of application: **18.06.2025**
(21) Application number: 23216568.8
(22) Date of filing: 14.12.2023
(51) Int. Cl.: G06N 3/0464, G06N 3/084, G06N 3/0895, G06N 3/09, H04B 17/345

(54) **METHOD AND DEVICE FOR ARTIFICIAL INTELLIGENCE-BASED SPECTRUM CATEGORIZATION**

(71) Applicant: Rohde & Schwarz GmbH & Co. KG, 81671 München (DE)
(72) Inventor: Aldridge, Chris, 486041 Singapore (SG); Hamid, Hassanul Hadi, 486041 Singapore (SG); Gay, Nicholas, 486041 Singapore (SG); Renusch, Jonathan, 486041 Singapore (SG)
(74) Representative: Rupp, Christian

(57) **Abstract**

A device for artificial intelligence-based spectrum categorization is provided. The device allows for identifying different signal types present within the spectrum and automatically categorizing them using image based artificial intelligence algorithms. The device is configured to receive a radio signal comprising an IQ sample, calculate a spectrogram of the IQ sample, convert the spectrogram into an image, and provide the image to a pre-trained convolutional neural network, CNN, stored in the device. The CNN is configured to determine, whether the radio signal corresponding to the image belongs to one of the following categories: noise floor, target signal, interference signal, target signal with interference signal.

## Description

### FIELD OF THE INVENTION

The present disclosure relates to the field of spectrum analysis and more specifically, it pertains to a method and device for artificial intelligence-based spectrum categorization. The invention is particularly useful in the context of analyzing radiofrequency (RF) signals within a specified bandwidth, identifying different signal types present within the spectrum, and automatically categorizing them using artificial intelligence algorithms.

### TECHNICAL BACKGROUND

In modern communication systems, spectrum analysis plays a vital role in detecting and identifying various signals for different applications, including interference monitoring, signal classification, and target signal detection. Traditionally, spectrum analysis involves processing large sets of IQ data obtained from radio signals, which can be resource-intensive and time-consuming.

Conventional methods of spectrum analysis typically involve human operators manually inspecting processed spectrums to detect anomalies and interference cases. However, this approach can be error-prone and time-consuming, especially when dealing with large data sets. Additionally, some signals may remain undetected due to the limitations of human perception and processing.

To overcome these challenges, various approaches have been proposed that leverage artificial intelligence algorithms to automate spectrum analysis.

However, these known methods still rely on processing numerical data, which may not fully leverage the capabilities of convolutional neural networks (CNNs).

### SUMMARY OF THE INVENTION

Against this background, the object of the present disclosure is to provide a method and device which allow for artificial intelligence-based spectrum categorization, in particular relying on conversion of the processed spectrum data into digital image files, creating a visual representation of the spectral data. Training image files can be used to train a CNN, stored in the device, for spectrum categorization. By using image-based AI analysis, the invention significantly improves the efficiency, accuracy, and reliability of spectrum categorization compared to conventional numerical data processing methods.

The invention is set out in the appended set of claims. The object is solved by the features of the independent claims. The dependent claims contain further developments.

A first aspect of the present disclosure provides a device for artificial intelligence, AI, based spectrum categorization, wherein the device is configured to receive a radio signal comprising an IQ sample; calculate a spectrogram of the IQ sample; convert the spectrogram into a digital image file; and provide the digital image file as input data to a pre-trained convolutional neural network, CNN, stored in the device; wherein the CNN is configured to determine, whether the radio signal corresponding to the image belongs to one of the following categories: noise floor, target signal, interference signal, target signal with interference signal.

The invention proposes a computer-implemented method for image-based spectrum classification, comprising:
a. Receiving a digital image of the spectrum as input data;
b. Providing a trained neural network comprising a plurality of layers, including an input layer, one or more hidden layers, and an output layer;
c. Processing said digital image through said neural network to generate an output probability distribution across a set of predefined image classes; the predefined image classes being e.g. noise floor, target signal, interference signal, target signal with interference signal,
d. Determining a predicted class for said digital image based on the highest probability in said output probability distribution;
e. Training said neural network using a labeled dataset, wherein said labeled dataset comprises a plurality of digital images, each associated with a corresponding ground truth label;
f. Adjusting the weights and biases of said neural network during training using a backpropagation algorithm to minimize the difference between the predicted class and the ground truth label;
g. Storing the adjusted weights and biases of said neural network for subsequent use in image classification.

The invention also proposes an image-based system for spectrum classification, comprising:
a. A processor configured to execute instructions for implementing the method explained above; and
b. A memory storing said trained neural network and said labeled dataset.

This offers several advantages over conventional spectrum analysis methods. Efficiency: The image-based approach significantly reduces the time required for spectrum categorization, as operators no longer need to manually inspect numerical data. Accuracy: The AI algorithms, specifically the CNN, enhance the accuracy of spectrum categorization by leveraging their capabilities in image recognition and pattern detection. Automation: The invention automates the spectrum categorization process, reducing the risk of human errors and providing consistent and reliable results. Anomaly Detection: The device can accurately detect anomalies, target signals, and interference within the analyzed spectrum, aiding in the identification of critical signal events.

In particular, spectrum categorization comprises the process of classifying RF signals into different categories based on their characteristics and attributes.

In particular, an IQ Sample comprises in-phase and quadrature components of a complex signal, which represent the real and imaginary parts of the signal, respectively.

In particular, a spectrogram comprises a visual representation of the frequency content of a signal over time, e.g., used for analyzing time-varying signals like RF signals.

In particular, a CNN comprises a type of artificial neural network particularly suited for image recognition tasks, as it automatically learns hierarchical features from the input data.

In particular, a noise floor comprises the level of background noise present in a spectrum that represents the minimum discernible signal level.

In particular, a target signal comprises the desired signal or signal of interest that needs to be detected and analyzed in the spectrum.

In particular, an interference signal comprises signals that interfere with the target signal or may cause distortion or degradation of the desired signal.

In particular, determining whether the radio signal corresponding to the image belongs to one of said categories means that an anomaly can be detected in the radio signal.

In particular, the image generated from the spectrogram includes spectral data corresponding to the IQ sample.

In particular, the anomaly comprises an interference.

In particular, the IQ sample comprises an in-phase component and a quadrature component.

In particular, the CNN is further configured to indicate, within a time series of spectrograms, a position of the spectrogram to which the determined category relates.

In particular, the device is configured to perform the above-mentioned steps of receiving, calculating, converting and providing in an inference phase of the device.

In particular, the inference phase comprises a phase in which the device applies the trained CNN to categorize new spectrums based on their images.

In an implementation form of the first aspect, the device is further configured to train the CNN based on a training spectrogram obtained from a training IQ sample.

This ensures that the device can be effectively trained for AI based spectrum analysis.

In particular, the training spectrogram comprises spectrogram data used to train the CNN for spectrum categorization.

In particular, the training IQ sample is received by the device in a training phase of the device.

In a further implementation form of the first aspect, the device is configured to apply a clustering algorithm such as e.g. a KMEANS algorithm to the training spectrogram to train the CNN, wherein the KMEANS algorithm is configured to generate tags indicating groups of similar training spectrograms.

The KMEANS algorithm ensures that the CNN is reliably trained based on the training spectrogram.

In particular, the KMEANS Algorithm comprises a clustering algorithm used to partition data into groups or clusters based on similarity.

In particular, the KMEANS algorithm is configured to start in a random state.

In particular, the KMEANS algorithm is configured to apply numerical analysis to the training spectrogram.

In particular, the KMEANS algorithm is configured to process vectorized numerical data.

In a further implementation form of the first aspect, the KMEANS algorithm is further configured to classify the training spectrogram into a training category based on the generated tags.

This further ensures that the CNN is reliably trained.

In particular, the classification is based on at least one of the following: a symmetry around a center frequency, a bandwidth, an interference level.

In a further implementation form of the first aspect, the training category comprises one of the following: noise floor, target signal, interference signal, target signal with interference signal.

In particular, symmetry around a Center frequency comprises the property of a signal's spectral content being evenly distributed around its center frequency.

In particular, the bandwidth comprises the range of frequencies occupied by a signal or a channel.

This provides various categories of signals and spectrums which can be analyzed by the device.

In a further implementation form of the first aspect, the device is further configured to convert the training spectrogram into a training image and train the CNN based on the training image.

This ensures that advantages of AI based image recognition can be used for spectrum classification.

In particular, the training image reflects the information in the generated tags.

In particular, the training image reflects the classified training category.

In particular, the training image comprises a bitmap image.

In particular, the bitmap image comprises a digital image representation where each pixel is individually defined, allowing for a detailed visual representation.

In particular, the training image generated from the training spectrogram includes spectral data corresponding to the training IQ sample.

In particular, the training image comprises an image representation of the training spectrogram used to train the CNN.

In a further implementation form of the first aspect, the device is further configured to convert the training spectrogram into a training scatter diagram and train the CNN based on the training scatter diagram.

This further increases accuracy of training the CNN.

In particular, the training scatter Diagram comprises a graphical representation of data points in a multidimensional space, used as an alternative method for training the CNN.

A second aspect of the present disclosure provides a computer-implemented method for artificial intelligence, AI, based spectrum categorization, wherein the method comprises the steps of receiving a radio signal comprising an IQ sample; calculating a spectrogram of the IQ sample; converting the spectrogram into an image; and providing, the image to a pre-trained convolutional neural network, CNN, stored in the device; wherein the CNN determines, whether the radio signal corresponding to the image belongs to one of a plurality of categories which may comprise at least: noise floor, target signal, interference signal, target signal with interference signal.

In an implementation form of the second aspect, the method further comprises the step of training, by the device, the CNN based on a training spectrogram obtained from a training IQ sample.

In a further implementation form of the second aspect, the method further comprises the step of applying, by the device, a KMEANS algorithm to the training spectrogram to train the CNN, wherein the KMEANS algorithm generates tags indicating groups of similar training spectrograms.

In a further implementation form of the second aspect, the KMEANS algorithm classifies the training spectrogram into a training category based on the generated tags.

In a further implementation form of the second aspect, the training category comprises one of the following: noise floor, target signal, interference signal, target signal with interference signal.

In a further implementation form of the second aspect, the method further comprises the step of converting, by the device, the training spectrogram into a training image and training the CNN based on the training image.

In a further implementation form of the second aspect, the method further comprises the step of converting, by the device, the training spectrogram into a training scatter diagram and train the CNN based on the training scatter diagram.

A third aspect of the present disclosure provides a computer program comprising instructions which, when the program is executed by a computer, cause the computer to carry out the method according to the second aspect or any of its implementation forms.

The third aspect and its implementation forms include the same advantages as the first aspect and its respective implementation forms.

An exemplary embodiment of the invention is now further explained with respect to the drawings by way of examples only, in which
FIG. 1 shows a schematic view of a device according to an embodiment of the present disclosure;
FIG. 2 shows a schematic view of a device according to an embodiment of the present disclosure in more detail;
FIG. 3 shows training images according to the present disclosure;
FIG. 4 shows a schematic view of a method according to an embodiment of the present disclosure.

### DETAILED DESCRIPTION

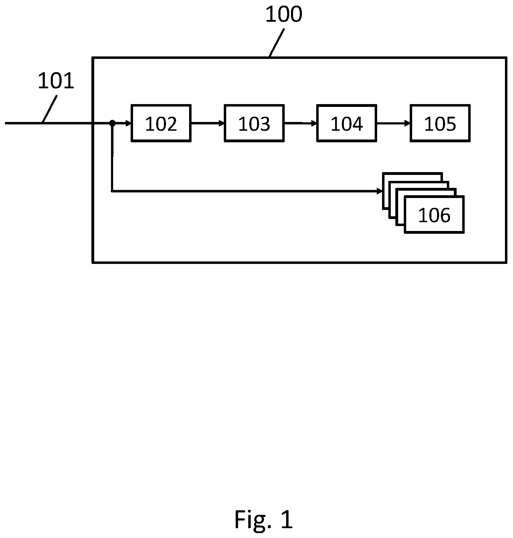

Fig. 1 shows a schematic illustration of a device 100. The device 100 is for artificial intelligence, AI, based spectrum categorization. To this end, the device is configured to receive a radio signal 101. The radio signal 101 comprises an IQ sample 102. The device 100 then calculates a spectrogram 103 of the IQ sample 102 and converts the spectrogram 103 into a digital image file 104. The device 100 the provides the digital image file 104 to a pre-trained convolutional neural network, CNN, 105 stored in the device 100.

The spectrogram may be produced e.g. Matlab subroutines.

The digital image files may be bitmap files.

To enable AI based spectrum categorization, the CNN 105 is configured to determine, whether the radio signal 101 corresponding to the image 104 belongs to one of the following categories 106: noise floor, target signal, interference signal, target signal with interference signal.

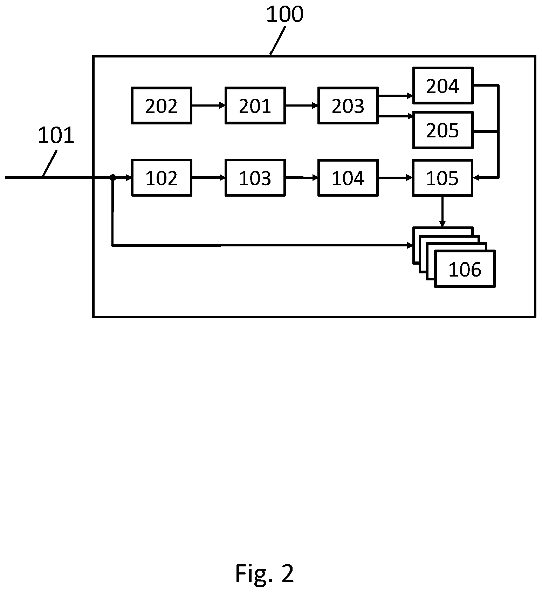

Fig. 2 shows a schematic illustration of the device 100 in more detail. Fig. 2 in particular shows the optional features of the device 100. That is, each feature described below can be added to the device of Fig. 1, independently from other features described.

As shown, the device 100 optionally can train the CNN 105 based on a training spectrogram 201 obtained from a training IQ sample 202.

Further optionally, the device 100 can apply a KMEANS algorithm 203 to the training spectrogram 201 to train the CNN 105. The KMEANS algorithm 203 can generate tags indicating groups of similar training spectrograms 201.

KMEANS algorithm is a known example for a clustering algorithm. It is known to be used in machine learning and data analysis. It is an example of an iterative algorithm that partitions a dataset into K distinct, non-overlapping subgroups or clusters. Each data point belongs to the cluster with the nearest mean, and the algorithm aims to minimize the sum of squared distances between data points and the mean of their assigned cluster.

Further optionally, the KMEANS algorithm 203 can classify the training spectrogram 201 into a training category based on the generated tags. The training category may comprise at least one of the following: noise floor, target signal, interference signal, target signal with interference signal.

Further optionally, and as illustrated in FIG. 2, the device 100 can convert the training spectrogram 201 into a training image 204 and train the CNN 105 based on the training image 204.

Further optionally, the device 100 can convert the training spectrogram 201 into a training scatter diagram 205 and train the CNN 105 based on the training scatter diagram 205.

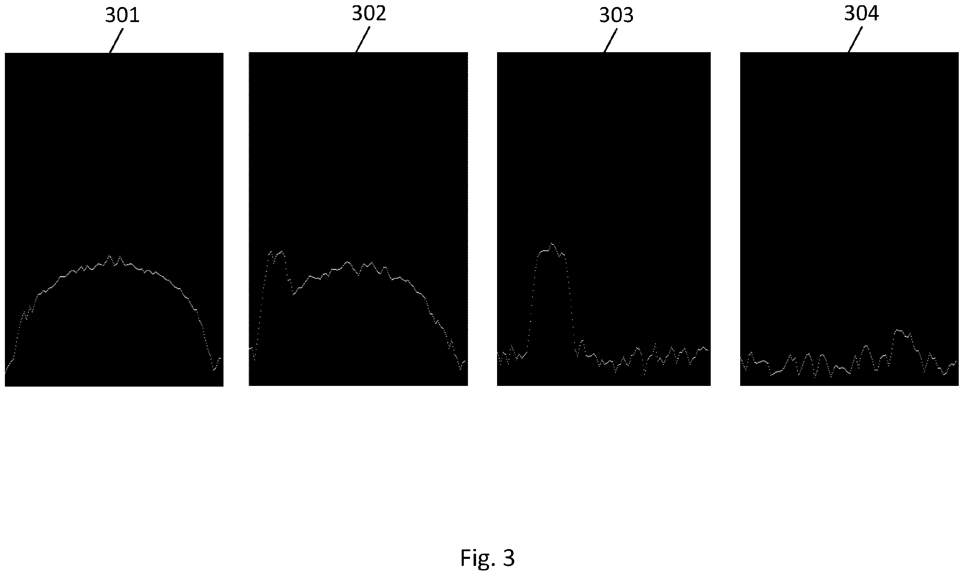

FIG. 3 shows exemplary training images 301, 302, 303, 304 according to the present disclosure. The training image 204 above can be one of these training images 301, 302, 303, 304.

Training image 301 shows a target signal. Training image 302 shows a target signal with interference signal. Training image 303 shows an interference signal. Training image 301 shows a noise floor.

The device 100 was tested by analyzing of 12 seconds of IQ data 102 recorded at 120 MHz bandwidth, specifically within the 2.4 to 2.5 GHz frequency range. The IQ samples 102 were converted to a radix-1200 spectrum, and a max-hold algorithm was applied to produce processed spectrums.

The analysis focused on three 8 MHz bands centered at 2.405 GHz, 2.415 GHz, and 2.425 GHz within the central 80 MHz of the spectrum. The spectrums were processed at 80 µs intervals, and FFT was achieved using a mixed-radix algorithm with a 100 kHz bandwidth for each spectral-bin. The windowing function selected was Blackman, ensuring no overlap occurs between spectrums.

The K-means clustering algorithm 203 was then applied to classify the processed spectrums into four categories: noise floor, target signal, non-target signal, and target signal + interference. This algorithm, based on numerical data processing, effectively groups spectrums with similar characteristics for further analysis.

After classification, the categorized spectrums were converted into bitmap images 204, creating visual representations of the spectral data 103. These images 204 were then used to train a pre-existing CNN 105, stored in the device 100, for spectrum categorization.

The trained CNN 105 can automatically categorize new processed spectrums 103 based on the presented images 104, improving the efficiency and accuracy of spectrum analysis. The CNN 105 can indicate the category of the analyzed spectrum 103, including the presence of anomalies, target signals, and interference.

In conclusion, the present invention introduces a novel method and device for artificial intelligence-based spectrum categorization, revolutionizing the efficiency and accuracy of RF signal analysis. The image-based approach and utilization of CNNs provide operators with a reliable and automated tool for spectrum analysis, significantly improving the detection of anomalies and target signals within the radio spectrum.

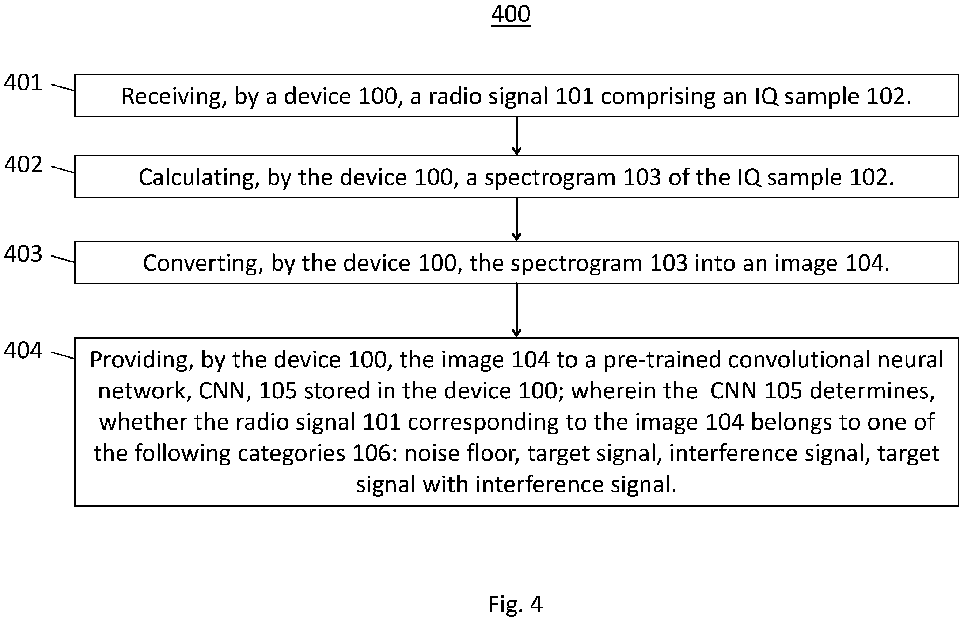

FIG. 4 schematically shows a method 400 for artificial intelligence, AI, based spectrum categorization.

The method 400 comprises a first steps of receiving 401, by a device 100, a radio signal 101comprising an IQ sample 102. The method 400 comprises a second step of calculating 402, by the device 100, a spectrogram 103 of the IQ sample 102. The method comprises a third step of converting 403, by the device 100, the spectrogram 103 into an image 104. The method comprises a last step of providing 404, by the device 100, the image 104 to a pre-trained convolutional neural network, CNN, 105 stored in the device 100. The CNN 105 determines whether the radio signal 101 corresponding to the image 104 belongs to one of the following categories 106: noise floor, target signal, interference signal, target signal with interference signal.

It is important to note that the inventive device and method very closely correspond. Therefore, all the above said regarding the device is also applicable to the method. Everything which is described in the description and/or claimed in the claims and/or drawn in the drawings can be combined.

The invention is not limited to the illustrated embodiment. The network devices may be mobile terminals such as mobile phones, but also computers such as personal computers or the like. All features described above, or features shown in the figures can be combined with each other in any advantageous manner within the scope of the invention.

## Claims

1. A device (100) for artificial intelligence, AI, based spectrum categorization, wherein the device is configured to:
- receive a radio signal (101) comprising an IQ sample (102) ;
- calculate a spectrogram (103) of the IQ sample (102);
- convert the spectrogram (103) into a digital image file (104); and
- provide, as input data, the digital image file (104) to a pre-trained convolutional neural network, CNN, (105) stored in the device (100);
wherein the CNN (105) is configured to issue an output signal indicating whether the radio signal (101) corresponding to the image (104) belongs to one of a predefined group of categories (106) which may comprise at last: noise floor, target signal, interference signal, target signal with interference signal.

2. The device (100) according to claim 1, further configured to train the CNN (105) based on a training spectrogram (201) obtained from a training IQ sample (202) .

3. The device (100) according to claim 2, further configured to apply a clustering algorithm such as e.g. a KMEANS algorithm (203) to the training spectrogram (201) to train the CNN (105), wherein the KMEANS algorithm (203) is configured to generate tags indicating groups of similar training spectrograms (201).

4. The device (100) according to claim 3, wherein the KMEANS algorithm (203) is further configured to classify the training spectrogram (201) into a training category based on the generated tags.

5. The device (100) according to claim 4, wherein the training category comprises one of the following: noise floor, target signal, interference signal, target signal with interference signal.

6. The device (100) according to any one of claims 2 to 5, wherein the device (100) is further configured to convert the training spectrogram (201) into a training image (204) and train the CNN (105) based on the training image (204).

7. The device (100) according to any one of claims 2 to 6, wherein the device (100) is further configured to convert the training spectrogram (201) into a training scatter diagram (205) and train the CNN (105) based on the training scatter diagram (205).

8. A computer-implemented method for spectrum categorization, wherein the method (400) comprises the steps of:
- receiving (401) a radio signal (101) comprising an IQ sample (102);
- calculating (402) a spectrogram (103) of the IQ sample (102) ;
- converting (403) the spectrogram (103) into a digital image file (104); and
- providing (404), as input data, the digital image file (104) to a pre-trained convolutional neural network, CNN, (105) ;
wherein the CNN (105) issues a signal indicating, whether the radio signal (101) corresponding to the digital image file (104) belongs to one of a group of predefined categories (106) which may comprise at least: noise floor, target signal, interference signal, target signal with interference signal.

9. The method (400) according to claim 8, further comprising the step of training, by the device (100), the CNN (105) based on a training spectrogram (201) obtained from a training IQ sample (202).

10. The method (400) according to claim 9, further comprising the step of applying, by the device (100), a clustering algorithm such as e.g. a KMEANS algorithm (203) to the training spectrogram (201) to train the CNN (105), wherein the KMEANS algorithm (203) generates tags indicating groups of similar training spectrograms (201).

11. The method (400) according to claim 10, wherein the KMEANS algorithm (203) classifies the training spectrogram (201) into a training category based on the generated tags.

12. The method (400) according to claim 11, wherein the training category comprises one of the following: noise floor, target signal, interference signal, target signal with interference signal.

13. The method (400) according to any one of claims 9 to 12, further comprising the step of converting, by the device (100), the training spectrogram (201) into a training image (204) and training the CNN (105) based on the training image (204).

14. The method (400) according to any one of claims 9 to 13, further comprising the step of converting, by the device (100), the training spectrogram (201) into a training scatter diagram (205) and train the CNN (105) based on the training scatter diagram (205).

15. A computer program comprising instructions which, when the program is executed by a computer, cause the computer to carry out the method (400) according to any one of claims 8 to 14.
